# EUROPÄISCHE PATENTANMELDUNG

(11) **EP 1 176 080 A2**
(43) Veröffentlichungstag der Anmeldung: **30.01.2002**
(21) Anmeldenummer: 01115535.5
(22) Anmeldetag: 28.06.2001
(51) Int. Cl.: B62B 9/08

(54) **Kinder- oder Puppenwagen**

(30) Priorität: 27.07.2000 DE 20013071 U
(71) Anmelder: Joh. Georg Hartan, 96242 Sonnefeld (DE)
(72) Erfinder: Hartan, Rolf, 96242 Sonnefeld (DE); Wittig, Reinhard, 96523 Steinach (DE)
(74) Vertreter: Matschkur, Lindner Blaumeier Patent- und Rechtsanwälte

(57) **Zusammenfassung**

Kinder- oder Puppenwagen, mit einem Rahmengestell mit einem Fahrwerk, das mindestens eine mit mindestens einem um eine Radachse drehbaren Rad zusammenwirkende Bremseinrichtung aufweist, dadurch gekennzeichnet, dass die Bremseinrichtung mindestens einen mit mindestens einem achsparallel angeordneten Bremsbolzen (32) zusammenwirkenden Bremshebel (28) umfasst, wobei der in einer Führung (30,31) geführte Bremsbolzen (32) bei Betätigung des Bremshebels (28) zwischen einer Freigabestellung, in der er nicht in Eingriff mit mindestens einem mehrere zahnartige Rastaufnahmen (36) aufweisenden, auf der Radachse (27) drehfest angeordneten Rastteil (35) steht, in eine Bremsstellung, in der er in Eingriff mit dem Rastteil ist, zur Radachse (27) hin bewegbar ist.

## Beschreibung

Die Erfindung betrifft einen Kinder- oder Puppenwagen, mit einem Rahmengestell mit einem Fahrwerk, das mindestens eine mit mindestens einem um eine Radachse drehbaren Rad zusammenwirkende Bremseinrichtung aufweist.

Bei bekannten Kinder- oder Puppenwagen dient die Bremseinrichtung dazu, den Wagen dann, wenn er abgestellt wird, zu arretieren und ein ungewolltes Wegrollen zu verhindern. Bekannte Bremseinrichtungen umfassen einen in der Regel mit dem Fuß zu betätigenden Kunststoffbremshebel, an dem seitlich abstehend ein Fortsatz angeformt ist, der zum Bremsen an einem auf der Radachse sitzenden Kunststoffrastteil eingerastet werden kann. Diese Ausführung ist insoweit nachteilig, als der Fortsatz, der einstückig mit dem Bremshebel ist und folglich ebenfalls aus relativ weichem Kunststoff besteht, bei häufigem Betätigen abgenutzt und verformt werden kann, zumal in der Regel die Rastaufnahmen nicht so stehen, dass der Fortsatz ohne anzuschlagen eingeführt werden kann. Die Folge ist, dass die Bremseinrichtung im Laufe der Zeit nicht mehr zufriedenstellend arbeitet.

Der Erfindung liegt damit das Problem zugrunde, einen Kinder- oder Puppenwagen anzugeben, der die eingangs genannten Nachteile beseitigt.

Zur Lösung dieses Problems ist bei einem Kinder- oder Puppenwagen der eingangs genannten Art erfindungsgemäß vorgesehen, dass die Bremseinrichtung mindestens einen mit mindestens einem achsparallel angeordneten Bremsbolzen zusammenwirkenden Bremshebel umfasst, wobei der in einer Führung geführte Bremsbolzen bei Betätigung des Bremshebels zwischen einer Freigabestellung, in der er nicht in Eingriff mit mindestens einem mehrere zahnartige Rastaufnahmen aufweisenden, auf der Radachse drehfest angeordneten Rastteil steht, in eine Bremsstellung, in der er in Eingriff mit dem Rastteil ist, in der Führung hin zur Achse bewegbar ist.

Beim erfindungsgemäß vorgeschlagenen Wagen ist der Bremsbolzen ein separates Bauteil, das in einer Führung geführt ist und mit dem Bremshebel zusammenwirkt. Wird der Bremshebel betätigt so wird der Bremsbolzen in der Führung zur Radachse und damit zum Rastteil hin verschoben und kann einrasten. Da es sich um ein separates Bauteil handelt ist es möglich, den Bremsbolzen aus einem anderen Material als dem üblichen, relativ weichen Kunststoff, aus dem der Bremshebel gefertigt ist, herzustellen. Bevorzugt wird der beim erfindungsgemäßen Wagen verwendete Bremsbolzen aus Metall gefertigt, auch ist eine Ausführung aus einem harten, sich auch bei hoher Belastung nur wenig verformenden Kunststoff denkbar.

In Weiterbildung des Erfindungsgedankens kann vorgesehen sein, dass der Bolzen in einer vorzugsweise im Wesentlichen horizontal verlaufenden ersten Führungsnut eines von der Radachse durchsetzten Lagerteils und in einer bezüglich des Lagerteils schwenkbaren zweiten, am Bremshebel vorgesehenen Führungsnut aufgenommen ist, wobei die Führungsnuten derart geführt sind, dass der Bolzen bei Verschwenken des Bremshebels bezüglich des Lagerteils in der ersten Führungsnut verschoben wird. Nach dieser Erfindungsausgestaltung ist der Bremsbolzen in zwei Führungsnuten aufgenommen, wobei die eine an einem Lagerteil, das von der Radachse durchsetzt ist, und die andere am bezüglich des Lagerteils schwenkbaren Bremshebel vorgesehen ist. Beim Verschwenken des Bremshebels bewegt sich auch dessen Führungsnut, die den Bolzen führt, so dass dieser in der ersten Führungsnut des Lagerteils verschoben wird und je nach Bewegungsrichtung des Bremshebels zum Rastteil hin oder von diesem weg bewegt wird. Es wird auf diese Weise eine einfache Führung realisiert, die ein sicheres Verschieben des Bremsbolzens in der gewünschten Richtung ermöglicht. Dabei ist es besonders zweckmäßig, wenn der Bremshebel um die Radachse verschwenkbar ist, d.h., sowohl das Lagerteil als auch der Bremshebel werden von der Radachse durchsetzt. Aus Stabilitätsgründen hat es sich als zweckmäßig erwiesen, wenn der Bremshebel im Wesentlichen U-förmig ausgebildet ist und das Lagerteil beidseitig umgreift.

Um zu vermeiden, dass während des Schiebens des Wagens der Bremshebel ungewollt betätigt wird und der Bremsbolzen in Eingriff geschoben wird, hat es sich als besonders vorteilhaft erwiesen, wenn der Bremsbolzen federgelagert ist und gegen den Federdruck zur Achse hinbewegbar ist. Aufgrund der Federlagerung - zur Lagerung wird zweckmäßigerweise eine Spiralfeder verwendet - wird sichergestellt, dass der Bolzen stets von der Achse weggedrängt wird. Der Bremshebel ist also in die Bremsstellung gegen den Federdruck zu bewegen. Hierdurch ist ein unbeabsichtigtes Betätigen ausgeschlossen. Nach einer konkreten Erfindungsrealisation kann in diesem Zusammenhang am Lagerteil eine Bohrung vorgesehen sein, die senkrecht zu einem die Radachse aufnehmenden Lagerauge, dort mündend, verläuft, und in der die Feder aufgenommen ist, wobei sich die Feder mit einem Ende an der Radachse und mit dem anderen Ende an dem die Bohrung senkrecht durchsetzenden Bolzen abstützt. Die Feder ist in der entsprechend bemessenen Bohrung sicher geführt und stützt sich an einem Ende an der Radachse ab, wobei die sich hieraus ergebenden Reibungskräfte den normalen Schiebebetrieb des Wagens überhaupt nicht behindern. Aufgrund der direkten Anlage der Feder mit dem anderen Ende am Bremsbolzen ist eine sichere federkraftbedingte Bewegung des Bremsbolzens möglich. Um zu vermeiden, dass der lediglich in den beiden Führungsnuten geführte Bolzen seitlich auswandern kann, ist es zweckmäßig, wenn am Bremsbolzen eine Freimachung vorgesehen ist, in die die Feder eingreift. Hierdurch wird der Bolzen gegen seitliches Verschieben fixiert. Um schließlich die Bremseinrichtung in der Bremsstellung arretieren zu können, kann an der zweiten Führungsnut eine Rastausnehmung vorgesehen sein, in die der Bremsbolzen bei Erreichen der Bremsstellung eingreift und durch die Feder fest eingedrückt wird.

Um den Fahrkomfort eines Kinder- oder Puppenwagens zu verbessern, ist häufig eine Federungseinrichtung vorgesehen, die ein Federn der Räder bezüglich des Rahmengestells ermöglichen. Um insgesamt die Brems- und die Federungseinrichtung möglichst kompakt und mit wenig Teilen bilden zu können hat es sich als vorteilhaft erwiesen, wenn das Lagerteil an einem an einem im Wesentlichen vertikalen Gestellholm angeordneten Federungsteil schwenkbar gelagert ist, wobei im Federungsteil eine ein Federn des Lagerteils bezüglich des Federungsteils ermöglichende Druckfeder angeordnet ist, die mit einem Ende am Federungsteil und mit dem anderen Ende am Lagerteil gehaltert ist. Das Lagerteil, an dem bzw. mit dem zusammenwirkend die Bremseinrichtung angeordnet bzw. vorgesehen ist, ist gleichzeitig Teil der Federungseinrichtung, so dass sich insgesamt eine kompakte Baugruppe ergibt. Die hier verwendete, in der Einbaustellung im Wesentlichen vertikal stehende Druckfeder ist in einer entsprechenden Bohrung am Federungsteil aufgenommen und damit gekapselt, so dass sie gegen Verschmutzung geschützt ist. Zur Wegbegrenzung des Federwegs kann das am Lagerteil gehalterte Federende mittels eines eine Führungsnut am Federungsteil durchsetzenden Lagerbolzens gelagert sein, der Federweg wird durch die Länge der Nut begrenzt.

Da mit zunehmendem Alter des im Kinderwagen gefahrenen Kindes auch dessen Gewicht zunimmt, ändert sich im Laufe der Zeit die Belastung der Federungseinrichtung. Um die Federung anpassen zu können (hart - weich) hat es sich als besonders vorteilhaft erwiesen, wenn das andere Ende der Feder mittels eines eine Führungsnut am Federungsteil durchsetzenden Lagerbolzens gehaltert ist, der über die Feder gegen einen senkrecht zur Federachse angeordneten, drehbaren Gegenlagerbolzen gedrückt wird, wobei der Gegenlagerbolzen eine exzentrische oder eine eine Ausnehmung aufweisende Gegenlagerfläche für den Lagerbolzen aufweist. Mittels des Gegenlagerbolzens ist es möglich, den das obere Ende der Druckfeder lagernden Lagerbolzen, der in einer entsprechenden Nut am Führungsteil aufgenommen ist, durch Drehen des Gegenlagerbolzens in der Nut nach unten zu drücken und damit die Vorspannung der Druckfeder zu erhöhen. Zum Bewegen des Lagerbolzens ist eine exzentrische oder ausgeformte Gegenlagerfläche am Gegenlagerbolzen vorgesehen, auf welcher der Lagerbolzen abrollt. Der Gegenlagerbolzen kann zweckmäßigerweise in einer Bohrung am Federungsteil aufgenommen und mittels eines in eine bolzenseitige Ausnehmung eingreifenden Steckstifts gehaltert sein.

Aus Stabilitätsgründen hat es sich ferner als vorteilhaft erwiesen, wenn das Lagerteil eine vom Federungsteil durchsetzte zentrale Durchbrechung aufweist, das Federungsteil ist schmäler bemessen als das Lagerungsteil, so dass es in dessen zentrale Durchbrechung eingreifen kann.

Wie bereits ausgeführt ist es möglich, den Bremsbolzen aus Metall oder einem harten Kunststoff auszuführen. Das Rastteil selbst, das zahnradartig ausgeführt ist und eine Außenverzahnung aufweist, in die der Bremsbolzen über die aufgrund der Ausbildung der Führungsnut realisierte, im Wesentlichen horizontal verlaufende Verschiebebewegung eingeschoben wird, wird zweckmäßigerweise aus Kunststoff gefertigt, jedoch ist auch eine Metallausführung denkbar. Auch der Bremshebel, ggf. das Lagerteil und ggf. das Federungsteil können aus Kunststoff oder Metall bestehen.

Schließlich hat es sich als vorteilhaft erwiesen, wenn beiden um eine gemeinsame Achse drehbaren Rädern jeweils eine Bremseinrichtung zugeordnet ist. D.h., beim erfindungsgemäßen Kinder- oder Puppenwagen werden beide Hinterräder gebremst. Hierdurch ist sichergestellt, dass für den Fall, dass aufgrund einer Unachtsamkeit des Bedieners die eine Bremseinrichtung nicht richtig betätigt wurde, zumindest die andere greift. In diesem Zusammenhang hat es sich als vorteilhaft erwiesen, wenn die beiden Bremshebel über eine Bremsstange miteinander verbunden sind, so dass beide Bremshebel gleichzeitig durch Betätigen der Bremsstange bewegbar sind. Schließlich hat es sich als vorteilhaft erwiesen, wenn wenigstens einem Rad zwei auf der Radachse drehfest angeordnete, einander gegenüberliegende Rastteile zugeordnet sind, wobei der Bremsbolzen an beiden Seiten absteht und in beide Rastteile einrastbar ist. D.h., pro Bremseinrichtung sind zwei Rastteile vorgesehen, in die die Enden des einen Bremsbolzens eingeschoben werden können, es sind also zwei Raststellen vorgesehen, wodurch die Bremssicherheit noch verbessert wird.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze eines erfindungsgemäßen Kinder- oder Puppenwagens,
- Fig. 2: eine Darstellung in Form einer Sprengzeichnung des Bremshebels, des Lagerteils, des Federungsteils und des Gegenlagerbolzens,
- Fig. 3: die aus Fig. 2 bekannten Elemente in der Montagestellung mit einem in Lösestellung befindlichen Bremshebel, und
- Fig. 4: die Baugruppe aus Fig. 3 mit einem in Bremsstellung befindlichen Bremshebel.

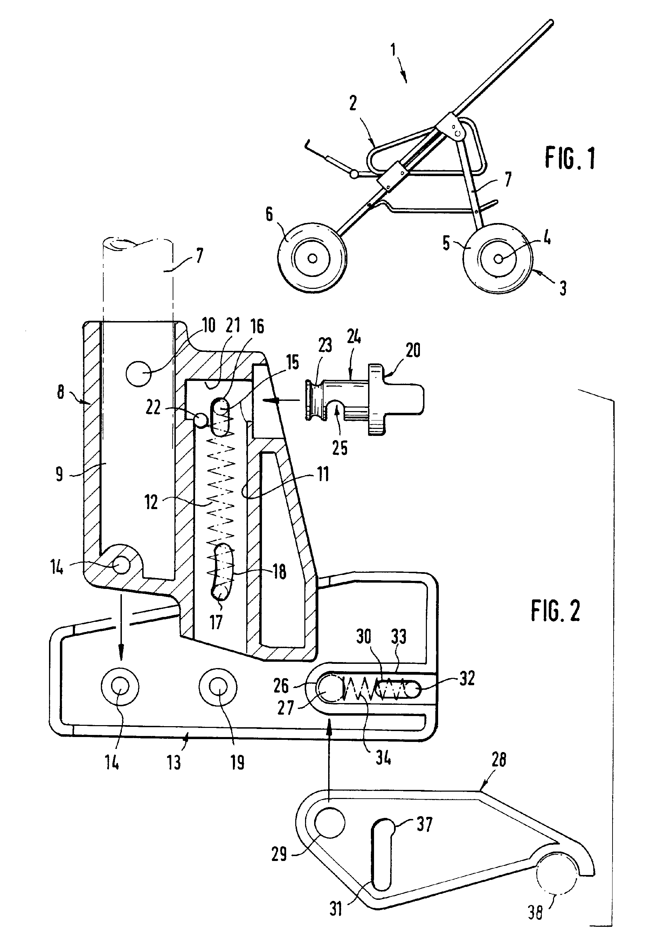

Fig. 1 zeigt als Prinzipskizze einen erfindungsgemäßen Kinder- oder Puppenwagen 1, bestehend aus einem Rahmengestell 2, sowie einem Fahrwerk 3. Im gezeigten Beispiel umfasst das Fahrwerk 3 zwei um eine gemeinsame Radachse 4 drehbare Hinterräder 5 sowie ein Vorderrad 6, wobei auch hier natürlich zwei Vorderräder vorgesehen sein können. Zur Halterung des Fahrwerks 3 an einem Gestellholm 7 ist ein Federungsteil 8, bevorzugt aus Kunststoff, vorgesehen, das eine Holmaufnahme 9 aufweist, in die der Holm eingreift und dort über eine Bolzenverbindung 10 gehaltert ist.

Am Federungsteil 8 ist ferner eine zweite Aufnahme 11 vorgesehen, in der eine in Fig. 2 strichpunktig angedeutete Druckfeder 12 aufgenommen ist. Diese Druckfeder 12 dient dazu, dass Federn eines Lagerteils 13, das in der Montagestellung schwenkbar mit dem Federungsteil 8 verbunden ist (hierfür sind am Federungsteil 8 sowie am Lagerteil 13 entsprechende, einen nicht gezeigten Lagerbolzen aufnehmende Lageraugen 14 vorgesehen, die in der Montagestellung miteinander fluchten) zu ermöglichen. Die Druckfeder 12 wird oberseitig mittels eines Lagerbolzens 15 fixiert, wobei der Lagerbolzen 15 in einer im Wesentlichen vertikal verlaufenden, relativ kurz bemessenen Führungsnut 16, die an beiden Seiten des Federungsteils 8 vorgesehen ist, gehaltert. Innerhalb dieser Führungsnut 16 ist der Lagerbolzen 15 verschiebbar. Mit dem unteren Ende wird die Druckfeder 12 mittels eines weiteren Lagerbolzens 17 gehaltert, wobei der Lagerungsbolzen 17 zum einen eine am Federungsteil 8 ausgebildete, leicht gebogene Führungsnut 18 (auch hier sind natürlich an beiden gegenüberliegenden Seitenwänden Führungsnuten 18 vorgesehen) durchsetzt, zum anderen ist der Lagerbolzen 17 in einem Lagerauge 19 des Lagerteils 13 befestigt. Die Druckfeder 12 drückt den Lagerbolzen 17 und damit das Lagerteil 13 stets nach unten, d.h., der Lagerbolzen 17 befindet sich, wenn das Lagerteil 13 nicht eingefedert ist, am unteren Nutende. Wird nun das Lagerteil 13 um die die Lageraugen 14 durchsetzende Achse nach oben geschwenkt, so wird die Druckfeder 12 komprimiert, der Lagerbolzen 17 wandert in der Führungsnut 18 nach oben. Der gesamte Federweg wird durch die Länge der Führungsnut 18 begrenzt.

Dem oberen Lagerbolzen 15 ist ein Gegenlagerbolzen 20 zugeordnet, der in eine Aufnahmebohrung 21 eingesetzt wird. Dort wird er mittels eines in eine Aufnahme 22 einzusteckenden, nicht näher gezeigten Steckstifts, der eine ringförmige Ausnehmung 23 eingreift, in seiner Position gehaltert. Der Lagerbolzen 15 ist an der Gegenlagerfläche 24 des Gegenlagerbolzens 20 aufgelagert. Die Gegenlagerfläche 24 weist eine Ausnehmung 25 an einer Seite auf, in die der Lagerbolzen 15 durch die Druckfeder 12 eingedrückt wird. Um die Federlänge zu verkürzen ist es nun möglich, den Gegenlagerbolzen 20 zu drehen, so dass die der Ausnehmung 25 gegenüberliegende Seite der Gegenlagerfläche 24 nach unten gedreht wird, auf der der Lagerbolzen 15 dann aufliegt. Während dieses Verdrehens wird der Lagerbolzen 15 in der Führungsnut 16 nach unten geschoben. Hierdurch wird der Federweg verkürzt und die Druckfeder unter Vorspannung gesetzt. Damit ist es also möglich, die Federung je nach Wunsch zwischen "weich" und "hart" zu verstellen.

Das Lagerteil 13 weist eine nicht dargestellte zentrale Durchbrechung auf, in die das Federungsteil 8 eingesetzt ist, d.h., das Lagerteil 13 umgreift das Federungsteil 8.

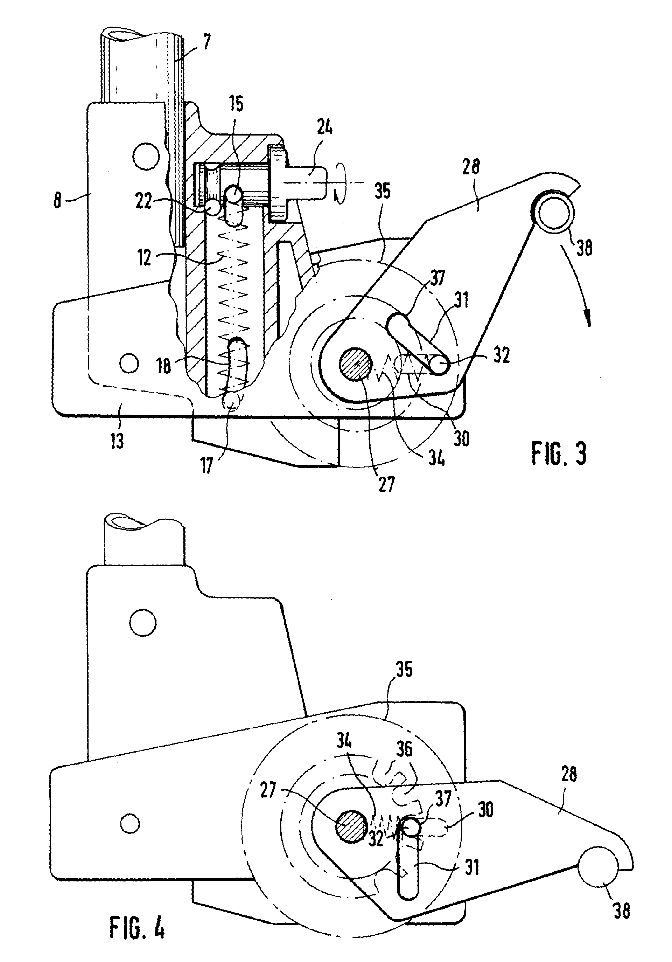

Am Lagerteil 13 ist ferner ein Lagerauge 26 zur Aufnahme der in Fig. 3 gezeigten Radachse 27 vorgesehen. An einem am Lagerteil schwenkbar befestigten Bremshebel 28 ist ein entsprechendes Lagerauge 29 vorgesehen, das in der Montagestellung deckungsgleich mit dem Lagerauge 26 ist und ebenfalls von der Radachse durchsetzt wird. Der Bremshebel 28 kann also bezüglich des Lagerteils 13 verschwenkt werden.

Weiterhin ist am Lagerteil 13 eine erste, im Wesentlichen horizontal verlaufende Führungsnut 30 vorgesehen, am Bremshebel 28 ist eine zweite Führungsnut 31 vorgesehen, wobei beide Führungsnuten in der Montagestellung übereinander liegen. Beide Führungsnuten werden von einem Bremsbolzen 32 durchsetzt, der beidseitig aus dem Bremshebel 28, der im Wesentlichen U-förmig ausgebildet ist und das Lagerteil 13 seitlich umgreift, hervorsteht.

Ferner ist am Lagerteil 13 eine Bohrung 33 vorgesehen, in die eine Feder 34, hier eine Spiralfeder eingesetzt ist. Diese Feder 34 ist mit ihrem einen Ende an der Radachse 27 gelagert, mit dem anderen Ende greift sie am Bremsbolzen 32 an und drückt diesen in der ersten Führungsnut 30 stets nach außen. Um zu vermeiden, dass der Bremsbolzen innerhalb der Führungen 30, 31 seitlich verrutschen kann ist eine nicht gezeigte Freimachung am Bremsbolzen vorgesehen, in die das Federende eingreift, so dass der Bremsbolzen nicht verrutschen kann.

Das Funktionsprinzip bzw. das Zusammenwirken des Bremshebels 28 mit dem Lagerteil 13 bzw. der beiden Führungsnuten 30, 31 zur Bewegung des Bremsbolzens 32 ist aus den Figuren 3 und 4 ersichtlich. Fig. 3 zeigt den Bremshebel in der angehobenen Lösestellung, d.h., das zugeordnete Rad ist also nicht gebremst. In dieser Stellung sind die Führungsnuten 30, 31 so bezüglich einander positioniert, dass der Bremsbolzen 32 über die Feder 34 an das hintere Ende der ersten Führungsnut 31 geführt ist. Er befindet sich also nicht in Eingriff mit dem auf der Radachse 27 drehfest angeordneten Rastteil 35, das als außenverzahnter Zahnkranz ausgebildet ist und eine Vielzahl von Rastausnehmungen 36, in die der Rastbolzen 32 eingeführt werden kann, aufweist.

Wird nun der Bremshebel 28 nach unten geschwenkt, so bewegt sich mit ihm die zweite Führungsnut 31. Aufgrund ihrer Anordnung wird sie an der ersten Führungsnut 30 vorbeigeführt. Hierdurch wird gleichzeitig der Bremsbolzen 32 in der ersten, zur Radachse 27 hin ausgerichteten Führungsnut 30 zur Radachse 27 hin gegen den Druck der Druckfeder 34 verschoben. Ist der Bremshebel 28 nach unten in die Bremsstellung gedrückt, so befindet sich der Bremsbolzen 32 in der Bremsstellung, in welcher er in eine Rastaufnahme 36 des Rastteils 35 eingreift. Da am oberen Ende der zweiten Führungsnut 31 eine kleine Rastausnehmung 37 vorgesehen ist, in die der Bremsbolzen 32 durch die Druckfeder 34 in der Bremsstellung gedrückt wird, wird verhindert, dass der Bremshebel allein durch die Rückstellkraft der Druckfeder 34 aus der in Fig. 4 gezeigten Bremsstellung wieder in die in Fig. 3 gezeigte Lösestellung gedrückt wird. Denn zum Lösen muss die Feder 34 erneut etwas komprimiert werden, da der Bremsbolzen 32 aus der Rastausnehmung 37 erst herausgedrückt werden muss.

Abschließend ist darauf hinzuweisen, dass - da der Bremsbolzen an beiden Seiten des Bremshebels 28 absteht - auch an beiden Seiten jeweils ein Rastteil 35 vorgesehen ist. Des Weiteren ist es natürlich möglich, an beiden Hinterrädern eine solche Bremseinrichtung vorzusehen. Entweder sind die beiden Bremshebel separat betätigbar, alternativ können sie mittels einer Bremsstange 38 miteinander verbunden und bewegungsgekoppelt sein, so dass bei einem Treten auf die Bremsstange automatisch beide Bremshebel in die Bremsstellung bzw. bei einem Anheben der Stange in die Lösestellung bewegt werden.

Insgesamt ermöglicht es die erfindungsgemäße Ausgestaltung der Bremseinrichtung, die das Lagerteil 13 und den Bremshebel 28 sowie die jeweiligen beschriebenen Teile umfasst, dass der ein separates Bauteil bildende Bremsbolzen durch das Zusammenwirken der Führungsnuten 30, 31 im Wesentlichen horizontal verschoben und zwischen der Löse- und der Bremsstellung hin- und herbewegt werden kann. Da es ein separates Bauteil ist ist es möglich, ihn aus Metall oder einem entsprechend harten Kunststoff zu fertigen. Insgesamt ergibt sich in Verbindung mit der Federeinrichtung umfassend zusätzlich das Federungsteil 8 sowie die federungsrelevanten Elemente eine in sich im Wesentlichen geschlossene und kompakte Mimik, die einen sicheren Brems- sowie Federbetrieb ermöglicht. Der Bremshebel, das Lagerteil sowie das Federungsteil sind zweckmäßigerweise aus Kunststoff gefertigt, Gleiches gilt für das drehfeste Rastteil.

## Patentansprüche

1. Kinder- oder Puppenwagen, mit einem Rahmengestell mit einem Fahrwerk, das mindestens eine mit mindestens einem um eine Radachse drehbaren Rad zusammenwirkende Bremseinrichtung aufweist, **dadurch gekennzeichnet, dass** die Bremseinrichtung mindestens einen mit mindestens einem achsparallel angeordneten Bremsbolzen (32) zusammenwirkenden Bremshebel (28) umfasst, wobei der in einer Führung (30, 31) geführte Bremsbolzen (32) bei Betätigung des Bremshebels (28) zwischen einer Freigabestellung, in der er nicht in Eingriff mit mindestens einem mehrere zahnartige Rastaufnahmen (36) aufweisenden, auf der Radachse (27) drehfest angeordneten Rastteil (35) steht, in eine Bremsstellung, in der er in Eingriff mit dem Rastteil (35) ist, zur Radachse (27) hin bewegbar ist.

2. Kinder- oder Puppenwagen nach Anspruch 1, **dadurch gekennzeichnet, dass** der Bremsbolzen (32) in einer vorzugsweise horizontal verlaufenden ersten Führungsnut (30) eines von der Radachse (27) durchsetzten Lagerteils (13) und in einer bezüglich des Lagerteils (13) schwenkbaren zweiten, am Bremshebel (28) vorgesehenen Führungsnut (31) aufgenommen ist, wobei die Führungsnuten (30, 31) derart geführt sind, dass der Bremsbolzen (32) bei Verschwenken des Bremshebels (28) bezüglich des Lagerteils (13) in der ersten Führungsnut (30) verschoben wird.

3. Kinder- oder Puppenwagen nach Anspruch 1 oder 2, **dadurch gekennzeichnet, dass** der Bremshebel (28) um die Radachse (27) verschwenkbar ist.

4. Kinder- oder Puppenwagen nach Anspruch 2 oder 3, **dadurch gekennzeichnet, dass** der Bremshebel (28) im Wesentlichen U-förmig ausgebildet ist und das Lagerteil (13) beidseitig umkreist.

5. Kinder- oder Puppenwagen nach einem der vorangehenden Ansprüche, **dadurch gekennzeichnet, dass** der Bremsbolzen (32) federgelagert ist und gegen den Federdruck zur Radachse (27) hin bewegbar ist.

6. Kinder- oder Puppenwagen nach Anspruch 5, **dadurch gekennzeichnet, dass** am Lagerteil (13) eine Bohrung (33) vorgesehen ist, die senkrecht zu einem die Radachse (27) aufnehmenden Lagerauge (26) verläuft, und in der die Feder (34) aufgenommen ist, wobei sich die Feder (34) mit einem Ende an der Radachse (27) und mit dem anderen Ende an dem die Bohrung (33) senkrecht durchsetzenden Bremsbolzen (32) abstützt.

7. Kinder- oder Puppenwagen nach Anspruch 5 oder 6, **dadurch gekennzeichnet, dass** der Bremsbolzen (32) eine Freimachung aufweist, in die die Feder (34) eingreift.

8. Kinder- oder Puppenwagen nach einem der Ansprüche 2 bis 7, **dadurch gekennzeichnet, dass** an der zweiten Führungsnut (31) eine Rastausnehmung (37) vorgesehen ist, in die der Bremsbolzen (32) bei Erreichen der Bremsstellung eingreift.

9. Kinder- oder Puppenwagen nach einem der vorangehenden Ansprüche, **dadurch gekennzeichnet, dass** das Lagerteil (13) an einem an einem im Wesentlichen vertikalen Gestellholm (7) angeordneten Federungsteil (8) schwenkbar gelagert ist, wobei im Federungsteil (8) eine ein Federn des Lagerteils (13) bezüglich des Federungsteils (8) ermöglichende Druckfeder (12) angeordnet ist, die mit einem Ende am Federungsteil (8) und am anderen Ende am Lagerteil (13) gehaltert ist.

10. Kinder- oder Puppenwagen nach Anspruch 9, **dadurch gekennzeichnet, dass** das am Lagerteil (13) gehalterte Federende mittels eines eine Führungsnut (18) des Federungsteils (8) durchsetzenden Lagerbolzens (17) gehaltert ist.

11. Kinder- oder Puppenwagen nach Anspruch 9 oder 10, **dadurch gekennzeichnet, dass** das andere Ende der Druckfeder (12) mittels eines eine Führungsnut (16) am Federungsteil (8) durchsetzenden Lagerbolzens (15) gehaltert ist, der über die Druckfeder (12) gegen einen im Wesentlichen senkrecht zur Federachse angeordneten drehbaren Gegenlagerbolzen (20) gedrückt wird, wobei der Gegenlagerbolzen (20) eine exzentrische oder mit einer Ausnehmung (25) versehene Gegenlagerfläche (24) für den Lagerbolzen (15) aufweist.

12. Kinder- oder Puppenwagen nach Anspruch 11, **dadurch gekennzeichnet, dass** der Gegenlagerbolzen (20) in einer Bohrung (21) am Federungsteil (8) aufgenommen und mittels eines in eine bolzenseitige Ausnehmung (23) eingreifenden Steckstifts gehaltert ist.

13. Kinder- oder Puppenwagen nach einem der Ansprüche 9 bis 12, **dadurch gekennzeichnet, dass** das Lagerteil (13) eine vom Federungsteil (8) durchsetzte zentrale Durchbrechung aufweist.

14. Kinder- oder Puppenwagen nach einem der vorangehenden Ansprüche, **dadurch gekennzeichnet, dass** der Bremsbolzen (32) aus Metall oder einem vorzugsweise harten Kunststoff ist.

15. Kinder- oder Puppenwagen nach einem der vorangehenden Ansprüche, **dadurch gekennzeichnet, dass** das Rastteil ein Kunststoffteil.

16. Kinder- oder Puppenwagen nach einem der vorangehenden Ansprüche, **dadurch gekennzeichnet, dass** der Bremshebel, ggf. das Lagerteil und ggf. das Federungsteil aus Kunststoff oder Metall sind.

17. Kinder- oder Puppenwagen nach einem der vorangehenden Ansprüche, **dadurch gekennzeichnet, dass** beiden um eine gemeinsame Radachse (27) drehbaren Rädern jeweils eine Bremseinrichtung zugeordnet ist.

18. Kinder- oder Puppenwagen nach Anspruch 17, **dadurch gekennzeichnet, dass** die beiden Bremshebel (28) über eine Bremsstange (38) miteinander verbunden sind.

19. Kinder- oder Puppenwagen nach einem der vorangehenden Ansprüche, **dadurch gekennzeichnet, dass** wenigstens einem Rad zwei auf der Radachse drehfest angeordnete, einander gegenüberliegende Rastteile (35) zugeordnet sind, und dass der Bremsbolzen (32) an beiden Seiten absteht und in die beiden Rastteile (35) einrastbar ist.
